# EUROPEAN PATENT SPECIFICATION

(11) **EP 2 141 028 B1**
(45) Date of publication and mention of the grant of the patent: **27.03.2013**
(21) Application number: 09163989.8
(22) Date of filing: 29.06.2009
(51) Int. Cl.: B60B 33/00, B62B 5/00

(54) **Caster assembly**
Rollenanordnung
Ensemble de roulettes

(30) Priority: 02.07.2008 KR 20080063693; 23.06.2009 KR 20090056020
(43) Date of publication of application: 06.01.2010
(73) Proprietor: Samsung Medison Co., Ltd., Gangwon-do (KR)
(72) Inventor: Ahn, June Young, 135-851, Seoul (KR); Lee, Sun Ki, 135-851, Seoul (KR); Kim, Gi Young, 135-851, Seoul (KR)
(74) Representative: Schmid, Wolfgang

(56) References cited:
- CA-A1- 1 190 573
- DE-A1-102005 035 289
- FR-A1- 2 026 031
- FR-A2- 2 511 403
- US-A- 3 802 717
- US-A- 4 743 039
- US-B1- 6 964 423

## Description

The present application claims priority to Korean Patent Application No. 10-2008-63693 filed on July 2, 2008 and Korean Patent Application No. 10-2009-56020 filed on June 23, 2009, the entire disclosures of which are hereby incorporated by reference.

### TECHNICAL FIELD

The present disclosure relates to a caster assembly for use with a transportable body, and more particularly to a caster assembly for use with a medical imaging equipment, which is capable of variously positioning casters.

### BACKGROUND

An ultrasonic diagnostic apparatus has been widely used as a medical imaging equipment for displaying internal images of a subject's body and diagnosing the subject using the same. Generally, the ultrasonic diagnostic apparatus may include: a main body for receiving or housing various components for ultrasonic diagnosis therein; and a display device mounted on the main body for displaying ultrasonic images. Such an ultrasonic diagnostic apparatus may be constructed in a stationary or transportable type.

In a transportable type ultrasonic diagnostic apparatus, casters may generally be mounted on a bottom side of the main body. The casters may help to easily transport the ultrasonic diagnostic apparatus. Each of the casters may generally include: a caster frame pivotally mounted to the bottom side of the main body of the ultrasonic diagnostic apparatus; and a wheel coupled to and being rotatable around a joint shaft of the caster frame. By way of an example, four casters may be provided on the bottom side of the main body so as to support the ultrasonic diagnostic apparatus. In such an example, the casters are spaced apart from one another on the bottom side of the main body and are permitted to only rotate in their respective mount positions.

As the related-art technology has evolved, the main body of the ultrasonic diagnostic apparatus has become small-sized, miniaturized or lightened to improve its movability and space-effectiveness, while the display device has increased in size to provide a wider view and more information to users. However, the transportable type ultrasonic diagnostic apparatus is constructed to carry the display device through the main body. Also, the main body of the ultrasonic diagnostic apparatus must have a height sufficient enough for a user to operate. Thus, it is difficult to compatibly accomplish both the miniaturization of the main body and the increase in size of the display device at the same time. That is, since the small-sized main body cannot stably carry the big-sized display device, the main body must become larger according to the size increase of the display device. Otherwise, the display device must become smaller along with the miniaturization of the main body.

A caster assembly according to the preamble of claim 1 is known from US 6,964,432 B1.

FR 2 026 031 discloses a sales display stand mounted rotatably to support bars which are equipped with casters.

### SUMMARY

Various embodiments of a caster assembly for use with a medical imaging equipment are provided. In one embodiment of the present disclosure, by way of nonlimiting example, a caster assembly for use with a medical imaging equipment according to claim 1 is provided.

In one embodiment, the plurality of the support bars may comprise two support bars crossed to each other. In this embodiment, one of the two support bars may include a bridge portion, which is configured to allow a portion of the other of the two support bars to extend therethrough and to pivot therein. In one embodiment, the caster assembly may further comprise a device for pivotally coupling between the bridge portion and the other of the two support bars. The coupling device may include: a joint shaft passing through the other of the two support bars and the bridge portion one after the other; and thrust bearings disposed between one end of the joint shaft and a bottom side of the other of the two support bars, between the bridge portion and a top side of the other of the two support bars, and between the bridge portion and the transportable body. When the link bar is coupled to the engagement pin, the support bars are allowed to interlock.

The Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

Arrangements and embodiments may be described in detail with reference to the following drawings in which like reference numerals refer to like elements and wherein:
- FIG. 1: is a perspective view showing an illustrative embodiment of a caster assembly for use with a medical imaging equipment according to the present disclosure;
- FIG. 2: is an exploded perspective view of the caster assembly shown in FIG. 1;
- FIG. 3: is a perspective view illustrating a medical imaging equipment with the caster assembly mounted to its bottom side;
- FIG. 4: is a side elevational view of FIG. 3, illustrating an exemplary coupling between support bars of the caster assembly, wherein the support bars are partially sectioned; and
- FIGS. 5 to 8: are plan views showing operations of the caster assembly shown in FIG.1.

### DETAILED DESCRIPTION

A detailed description may be provided with reference to the accompanying drawings. One of ordinary skill in the art may realize that the following description is illustrative only and is not in any way limiting. Other illustrative embodiments may readily suggest themselves to such skilled persons having the benefit of this disclosure.

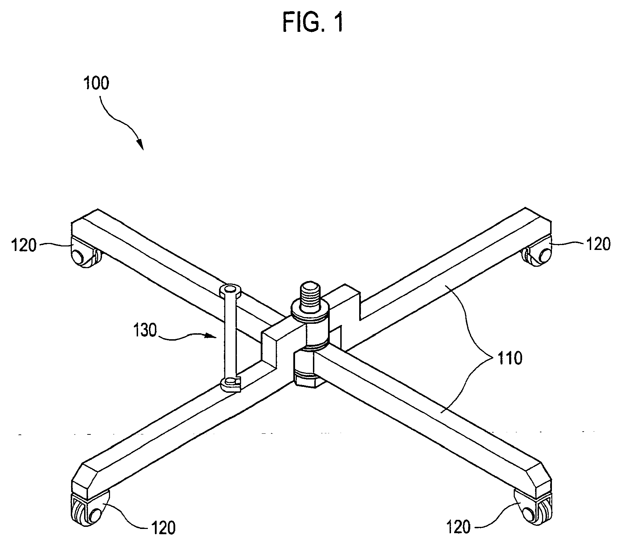

Referring now to FIGS. 1 to 4, in an exemplary embodiment of the present disclosure, a caster assembly 100 may comprise: a plurality of support bars 110; casters 120 disposed at each of the support bars 110; and a device 130 for interlocking the support bars 110. The support bars 110 are configured to pivotally mount a transportable body. The casters 120 are coupled to both ends of support bars 110 (e.g., opposite ends of the support bar), respectively.

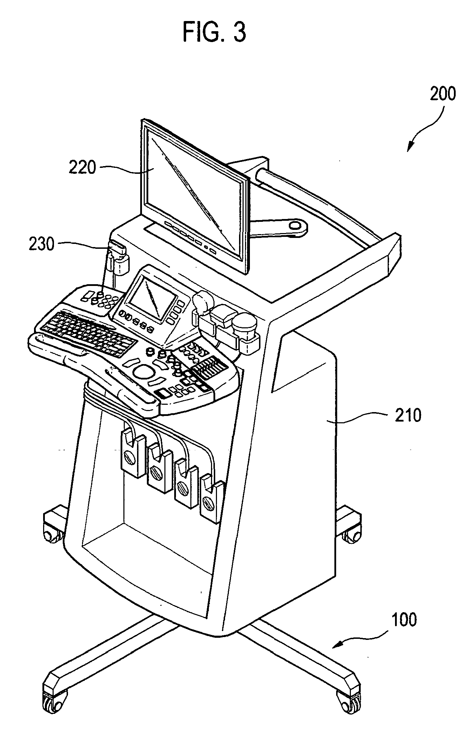

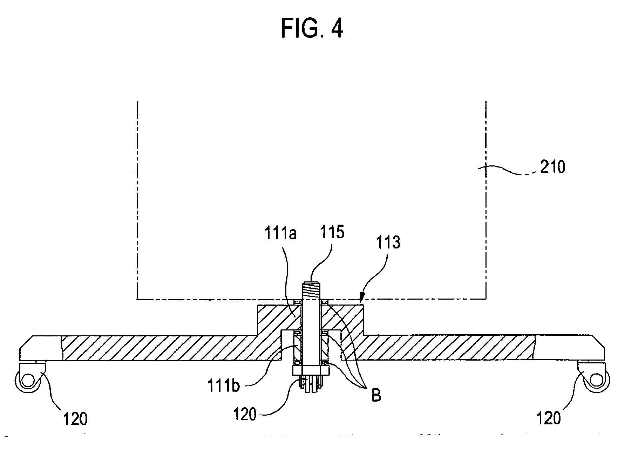

By way of an example, the transportable body may comprise, but is not limited to, a main body 210 of a medical imaging equipment, more particularly an ultrasonic diagnostic apparatus 200 (*see* FIGS. 3 and 4). In one embodiment shown in FIG 3, the ultrasonic diagnostic apparatus 200 may include the following: an ultrasonic probe 230 for radiating ultrasonic waves into a subject's body and converting an echo signal into an electric signal; the main body 210 for receiving or housing various components for ultrasonic diagnosis (e.g., control section (not shown) for processing the electric signals inputted from the ultrasonic probe 230, an input section (not shown) for inputting diverse operative commands to the control section, etc.) therein; and a display device 220 for displaying ultrasonic images processed by the control section.

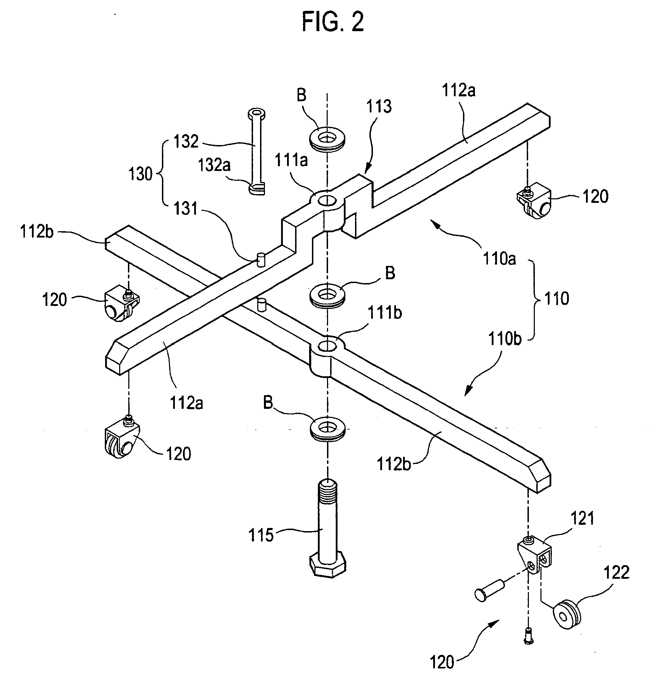

In the embodiment shown in FIGS. 1 and 2, the plurality of the support bars 110 may comprise two support bars 110, which may be placed as crossed to each other. In such a case, the plurality of support bars 110 may comprise a first support bar 110a lying upward and a second support bar 110b lying downward. Each of the support bars 110a, 110b may comprise a joint portion 111a, 111b and a support leg 112a, 112b bilaterally extending from the joint portion 111a, 111b.

The joint portion 111a of the first support bar 110a and the joint portion 111b of the second support bar 110b may have a shape of a ring, a sleeve, a cylinder, etc. Further, the joint portions 111a, 111b may be positioned at a central portion of the respective support bars 110a, 110b. Thus, when the first and second support bars 110a, 110b are coupled to each other, the first and second support bars 110a, 110b generally take a shape of the English letter "X".

The first support bar 110a may include a bridge portion 113 at the middle thereof. The joint portion 111a may be positioned in the bridge portion 113 and be integrally formed therewith. The bridge portion 113 may be configured to project or stand out upward relative to the support leg 112a by a predetermined height. In one embodiment, said height may be determined such that each of the support legs 112a, 112b lie at the same level. The bridge portion 113, which projects from the support leg 112a by said height, allows a portion of the second support bar 110b (specifically a portion including the joint portion 111b) to extend therethrough and to pivot therein within a range that the bridge portion 113 can provide. In an alternative embodiment, said bridge portion may be provided at the second support bar 110b instead of the first support bar 110a. In such a case, such a bridge portion may be configured to project downward relative to the support leg 112b. In a further alternative embodiment, two bridge portions may be provided at the first support bar 110a and the second support bar 110b, respectively. In this case, said two bridge portions may be formed to project in opposite directions.

The first and second support bars 110a, 110b may be mounted to the main body 210 of the ultrasonic diagnostic apparatus 200 by means of a hinge shaft or joint shaft 115, which passes through the joint portions 111a, 111b one after the other. The joint shaft 115 may comprise a bolt, which may be configured to pass through the joint portions 111a, 111b.

The joint shaft 115 may be screw-engaged to the bottom side of the main body 210 of the ultrasonic diagnostic apparatus 200 as having passed through the joint portions 111a, 111b. The main body 210 of the ultrasonic diagnostic apparatus 200 may be provided with a threaded hole for screw-engagement to the joint shaft 115. Accordingly, the first and second support bars 110a, 110b can pivot around the joint shaft 115, respectively, as mounted to the bottom side of the main body 210 by means of the joint shaft 115.

Thrust bearings B may be provided between the main body 210 of the ultrasonic diagnostic apparatus 200 and the first support bar 110a, between the first support bar 110a and the second support bar 110b, and between a head of the joint shaft 115 and the second support bar 110b. Thrust bearings B may serve to reduce friction and assist the relative rotation between the first and second support bars 110a, 110b. In an alternative embodiment, a stud, which is configured to pass through the joint portions 111a, 111b and has a threaded portion at its end, may be provided at the bottom side of the main body 210. In such an embodiment, the support bars 110a, 110b may be mounted to the bottom side of the main body 210 in a manner that the joint portions 111a, 111b are fitted to the stud and a nut is engaged to the threaded portion of the stud.

The casters 120 may be attached to the support legs 112a, 112b of the support bars 110a, 110b. Each of the casters 120 may include: a caster frame 121 coupled to an end side of a lower surface of the support leg 112a, 112b so as to rotate about an axis perpendicular to the ground surface; and a wheel 122 coupled to a caster frame 121 via an axle so as to freely rotate around the axle. Since the casters 120 are well known in the art, the description thereof will be omitted herein.

The device 130 for interlocking the support bars 110 may serve to maintain open spreads between the first and second support bars 110a, 110b to thereby maintain spacings between the casters 120. In an exemplary embodiment, the interlocking device 130 may include: an engagement pin 131 provided on an upper surface of the first support leg 112a; and a link bar 132 configured to link the first and second support bars 110a, 110b to each other. The link bar 132 is pivotally coupled to the second support leg 112b at its one end. The link bar 132 has an engagement portion 132a adapted to be engaged to the engagement pin 131 at its other end. The engagement portion 132a may be generally U-shaped to allow insertion engagement or fitting engagement of the engagement pin 131 into a concave section of its U-shape. In another embodiment, the engagement portion 132a may be generally C-shaped and may comprise elastic material to give elasticity to such a C-shape. When the engagement pin 131 and the link bar 132 are coupled to each other, the first and second support bars 110a, 110b may be allowed to interlock as the casters 120 are maintained with the spacing provided by engagement between the engagement pin 131 and the link bar 132. As such, the spacing between the casters 120 may be prevented from changing due to the rotation of the first and second support bars 110a, 110b in opposite directions.

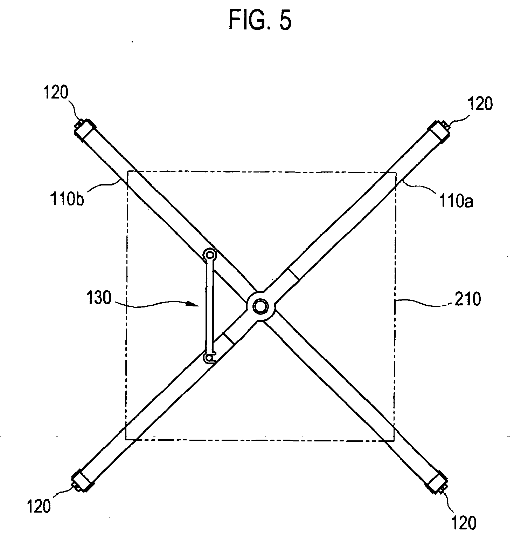

An example operation of the caster assembly as constructed above will be described below with reference to FIGS. 5 to 8.

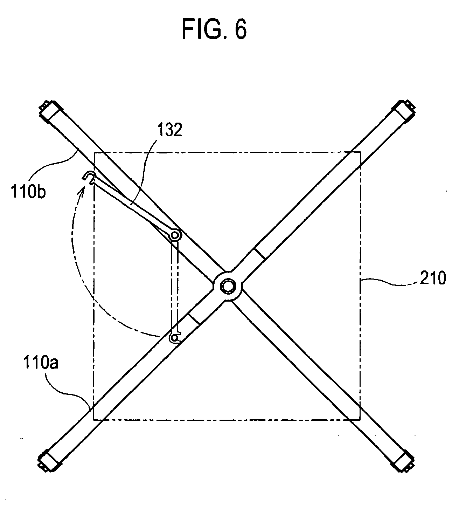

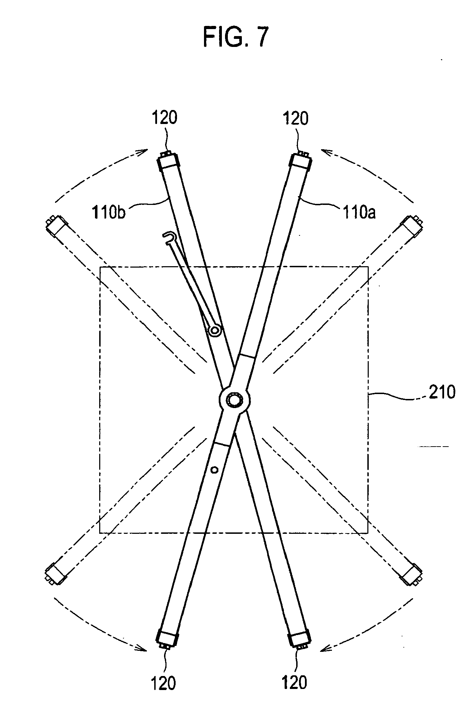

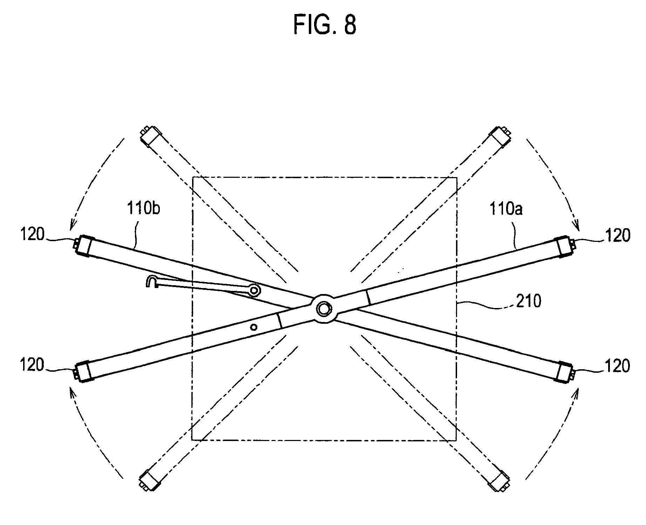

When the transportable body (e.g., in one embodiment, ultrasonic diagnostic apparatus 200) is stationary for its use or operation, the caster assembly 100 may be arranged as shown in FIG. 5 to stably support the ultrasonic diagnostic apparatus. In an example arrangement shown in FIG. 5, the first and second support bars 110a, 110b may be placed with a radial orientation about the main body 210 and under restriction of the interlocking device 130. Since the interlocking device 130 interlocks the first and second support bars 110a, 110b, the first and second support bars 110a, 110b may be positioned at a fixed angle (e.g., right angle) relative to each other while casters 120 may be situated without any change in spacing or interval therebetween. When the transportable body (e.g., in one embodiment, ultrasonic diagnostic apparatus 200) is needed to move anywhere to change its installation location, storage, maintenance, etc., the interlock between the first and second support bars 110a, 110b may be released (e.g., by disengaging the engagement portion 132a from the engagement pin 131) as shown in FIG. 6 and the first and second support bars 110a, 110b may have another orientation than that of FIG. 5 (e.g., by pivoting the first support bar 110a and the second support bar 110b in opposite directions) as shown in FIGS. 7 and 8. In particular, with the arrangement shown in FIGS. 7 and 8, the first and second support bars 110a, 110b have an open spread therebetween narrower than that of FIG. 5. Thus, the ultrasonic diagnostic apparatus may be transported through or be installed within a narrower space, thereby providing better movability and space-effectiveness.

Embodiments of the present disclosure may provide a caster assembly for use with an ultrasonic diagnostic apparatus. The caster assembly 100 may comprise: a plurality of support bars 110a, 110b pivotally mounted to a bottom side of a transportable body; and casters coupled to opposite ends of each of the support bars. The transportable body may be the main body 210 of the ultrasonic diagnostic apparatus 200. The caster assembly may further have the device 130 for interlocking the support bars 110a, 110b. Since the casters 120 are coupled to the pivotable support bars 110a, 110b, the caster assembly 100 can stably support any ultrasonic diagnostic apparatus that has a relatively small-sized or miniaturized main body and a relatively big-sized display device. Further, since the caster assembly 100 can variously position the casters 120 by means of the pivotable support bars 110a, 110b, the caster assembly 100 can provide better movability and space-effectiveness to the ultrasonic diagnostic apparatus 200, which is carried by the caster assembly 100. Furthermore, the caster assembly 100 having the above-described features may be fabricated with less cost and simple structure.

## Claims

1. A caster assembly, comprising:
a plurality of support bars (110) being rotatable to each other at central portions thereof; and
casters (120) coupled to opposite ends of each of the support bars,
**characterized in that**
the plurality of support bars (110) are configured to pivotally mount a transportable body, and **in that** there is provided a device (130) for interlocking the support bars which includes an engagement pin (131) provided at one of the support bars and a link bar (132) configured to be pivotally coupled to the other of the support bars (110a, 110b) at one end thereof, the link bar (132) having a portion (132a) for engaging to the engagement pin (131) at an opposite end thereof.

2. The caster assembly of Claim 1, wherein the transportable body comprises a main body of an ultrasonic diagnostic apparatus.

3. The caster assembly of Claims 1 or 2, wherein the support bars (110) comprise two support bars (110a, 110b) crossed to each other.

4. The caster assembly of Claim 3, wherein one of the two support bars (110a, 110b) includes a bridge portion (113), the bridge portion (113) being configured to allow a portion of the other of the two support bars (110a, 110b) to extend therethrough and to pivot therein.

5. The caster assembly of Claim 4, further comprising a device for pivotally coupling between the bridge portion (113) and the other of the two support bars (110a, 110b).

6. The caster assembly of Claim 5, wherein the coupling device includes:
a joint shaft (115) passing through the other of the two support bars (110a, 110b) and the bridge portion (113) one after the other; and
thrust bearings B disposed between one end of the joint shaft (115) and a bottom side of the other of the two support bars (110a, 110b), between the bridge portion (113) and a top side of the other of the two support bars (110a, 110b), and between the bridge portion (113) and the transportable body.

## Patentansprüche

1. Rollenanordnung, welche Folgendes aufweist:
eine Mehrzahl von Haltestangen (110), welche in mittleren Bereichen derselben zueinander drehbar sind; und
Rollen (120), die an gegenüberliegenden Enden von jeder der Haltestangen angebracht sind,
**dadurch gekennzeichnet, dass**
die Mehrzahl von Haltestangen (110) so ausgebildet sind, dass sie einen transportablen Körper gelenkig aufnehmern, und dass eine Einrichtung (130) zum Sichern der Haltestangen vorgesehen ist, welche einen Eingriffsstift (131), der an einer der Haltestangen angebracht ist, und eine Verbindungsstange (132) aufweiset, welche dafür vorgesehen ist, gelenkig an der anderen der Haltestangen (110a, 110b) an einem Ende derselben angebracht zu sein, wobei die Verbindungsstange (132) einen Abschnitt (132a) zum Eingriff mit dem Eingriffsstift (131) an einem gegenüberliegenden Ende desselben aufweist.

2. Rollenanordnung nach Anspruch 1, wobei der transportable Körper einen Grundkörper eines Ultraschalldiagnosegeräts aufweist.

3. Rollenanordnung nach Anspruch 1 oder 2, wobei die Haltestangen (110) zwei miteinander gekreuzte Haltestangen (110a, 110b) aufweisen.

4. Rollenanordnung nach Anspruch 3, wobei eine der zwei Haltestangen (110a, 110b) einen Brückenabschnitt (113) aufweist, wobei der Brückenabschnitt (113) so ausgebildet ist, dass er es einem Abschnitt der anderen der zwei Haltestangen (110a, 110b) erlaubt, sich durch denselben zu erstrecken und dort gelenkig aufgenommen zu sein.

5. Rollenanordnung nach Anspruch 4, welche des Weiteren eine Enrichtung zur gelenkigen Kopplung zwischen dem Brückenabschnitt (113) und der anderen der zwei Haltestangen (110a, 110b) aufweiset.

6. Rollenanordnung nach Anspruch 5, wobei die Kopplungsvorrichtung Folgendes aufweist:
eine Verbindungsachse (115), welche nacheinander durch die andere der zwei Haltestangen (110a, 110b) und den Brückenabschnitt (113) verläuft; und
Stützlager (B), welche zwischen einem Ende der Verbindungsachse (115) und einer Unterseite der anderen der zwei Haltestangen (110a, 110b), zwischen dem Brückenabschnitt (113) und einer Oberseite der anderen der zwei Haltestangen (110a, 110b) und zwischen dem Brückenabschnitt (113) und dem transportablen Körper angeordnet sind.

## Revendications

1. Assemblage à roulettes comportent :
une pluralité de barres de support (110) rotatives les unes par rapport aux autres dans leur partie centrale, et
des roulettes (120) montées aux extrémités opposées des barres de support,
**caractérisé en ce que**
la pluralité de barres de support (110) est agencée pour le montage pivotant d'un corps transportable, et **en ce qu'**il est prévu un dispositif (130) pour lier entre elles les barres de support, comprenant une goupille d'accrochage (131) disposée sur une des barres de support et une barre de liaison (132) configurée pour être couplée de façon pivotante à l'autre barre de support (110a, 110b), par une de ses extrémités, la barre de liaison (132) ayant une portion (132a) pour s'engager sur la goupille d'accrochage (131) à son extrémité opposée.

2. Assemblage à roulettes selon la revendication 1, dans lequel le corps transportable comprend un corps principal d'un appareil de diagnostic ultrasonique.

3. Assemblage à roulettes selon les revendications 1 ou 2, dans lequel les barres de support (110) comportent deux barres de support (110a, 110b) croisées l'une avec l'autre.

4. Assemblage à roulettes selon la revendication 3, dans lequel une des deux barres de support (110a, 110b) comporte une portion en forme de pont (113) agencée pour permettre à une portion de l'autre barre de support (110a, 110b) de s'engager sous elle et de pivoter à l'intérieur.

5. Assemblage à roulettes selon la revendication 4, comprenant en outre un dispositif pour assurer le couplage pivotant de la portion en forme de pont (113) et de l'autre des deux barres de support (110a, 110b).

6. Assemblage à roulettes selon la revendication 5, dans lequel le dispositif de couplage comprend :
un axe de liaison (115) traversant l'autre des deux barres de support (110a, 110b) et la portion en forme de pont (113) l'une après l'autre, et
des paliers B disposés entre une extrémité de l'axe de liaison (115) et un côté inférieur de l'autre des deux barres de support (110a, 110b), entre la portion en forme de pont (113) et le côté supérieur de l'autre des deux barres de support (110a, 110b) et entre la portion en forme de pont (113) et le corps transportable.
